# FASCICULE DE BREVET EUROPEEN

(11) **EP 0 907 613 B1**
(45) Date de publication et mention de la délivrance du brevet: **22.03.2000**
(21) Numéro de dépôt: 97925008.1
(22) Date de dépôt: 21.05.1997
(51) Int. Cl.: C01D 3/16

(54) **PROCEDE POUR LA FABRICATION D'UNE SOLUTION AQUEUSE INDUSTRIELLE DE CHLORURE DE SODIUM**
VERFAHREN ZUR HERSTELLUNG EINER INDUSTRIELLEN, WÄSSRIGEN NATRIUM-CHLORIDLÖSUNG
METHOD FOR PRODUCING AN INDUSTRIAL AQUEOUS SODIUM CHLORIDE SOLUTION

(30) Priorité: 24.05.1996 FR 9606575
(43) Date de publication de la demande: 14.04.1999
(73) Titulaire: SOLVAY (Société Anonyme), 1050 Bruxelles (BE)
(72) Inventeur: HUMBLOT, Cédric, F-54110 Dombasle-sur-Meurthe (FR); FEYS, Francis, F-54110 Dombasle-sur-Meurthe (FR); NINANE, Léon, F-54110 Dombasle-sur-Meurthe (FR)
(74) Mandataire: Anthoine, Paul
(86) Numéro de dépôt international: EP9702771
(87) Numéro de publication internationale: WO9745370

(56) Documents cités:
- WO-A-93/04983
- FR-A- 2 679 221
- US-A- 3 671 187
- PATENT ABSTRACTS OF JAPAN vol. 96, no. 002 & JP 08 041555 A (KOBE STEEL LTD), 13 Février 1996,

## Description

L'invention concerne un procédé pour la fabrication d'une solution aqueuse industrielle de chlorure de sodium.

Les solutions de chlorure de sodium trouvent des applications importantes dans l'industrie, en particulier dans l'industrie de la fabrication du carbonate de sodium par le procédé de la soude à l'ammoniaque, ainsi que dans les procédés de fabrication électrolytique du chlore et de solutions aqueuses d'hydroxyde de sodium. Ces procédés industriels requièrent en général des solutions aqueuses de chlorure de sodium de grande pureté, dont la teneur en métaux polyvalents tels que, par exemple, le calcium, le magnésium, l'aluminium, le fer, le plomb et le zinc, soit la plus faible possible.

On connaît un procédé de fabrication d'une solution aqueuse industrielle de chlorure de sodium, à partir d'un résidu solide recueilli du traitement par voie sèche, avec du bicarbonate de sodium, d'une fumée contenant du chlorure d'hydrogène et des métaux polyvalents [WO 93/04983 (SOLVAY)]. Pour préparer une solution aqueuse de chlorure de sodium selon ce procédé connu, on disperse dans de l'eau le résidu solide recueilli du traitement de la fumée, on règle, au besoin, le pH du milieu aqueux ainsi obtenu pour précipiter les métaux polyvalents à l'état d'hydroxydes métalliques, on filtre la dispersion aqueuse ainsi obtenue, on recueille de la filtration une solution aqueuse de chlorure de sodium et on soumet celle-ci à une étape finale d'épuration sur une résine chélatante. L'étape d'épuration sur une résine chélatante a pour fonction d'éliminer les traces de métaux polyvalents présents à l'état dissous dans la solution aqueuse.

Dans ce procédé connu, la teneur en plomb dans la solution aqueuse, avant que celle-ci ne soit traitée avec la résine chélatante, est généralement élevée Le traitement de cette solution aqueuse comprenant du plomb, au moyen de la résine chélatante résulte en l'absorption des ions de plomb, mais en raison de la grande quantité de plomb présente dans la solution, la résine est vite saturée et perd rapidement son efficacité d'épuration.

L'invention vise à fournir un procédé amélioré de fabrication d'une solution aqueuse industrielle, qui permet d'éviter les inconvénients décrits ci-dessus.

En conséquence, l'invention concerne un procédé pour la fabrication d'une solution aqueuse industrielle de chlorure de sodium, selon lequel :
. dans une première étape, on traite une fumée contenant du chlorure d'hydrogène, du plomb et des métaux polyvalents autres que Pb, par voie sèche, avec du bicarbonate de sodium pour former un résidu solide comprenant du chlorure de sodium, du carbonate de sodium, le plomb et les métaux polyvalents, puis on sépare le résidu solide de la fumée;
. dans une deuxième étape, on introduit dans un milieu aqueux, dont le pH est entre 8 et 14, le résidu solide recueilli de la première étape; et
. dans une troisième étape, on filtre le milieu aqueux recueilli de la deuxième étape et on recueille du filtre une solution aqueuse de chlorure de sodium, le procédé se caractérisant en ce que,
. dans une quatrième étape, on traite la solution aqueuse issue de la troisième étape au moyen d'au moins un agent précipitant du plomb, soluble, puis on écarte le précipité formé.

Dans le procédé selon l'invention, on entend désigner par solution aqueuse industrielle de chlorure de sodium, une solution aqueuse de chlorure de sodium qui est destinée à intervenir dans l'activité technique d'une industrie.

Dans le procédé selon l'invention, on met en oeuvre un agent précipitant du plomb, soluble. Par agent précipitant du plomb, soluble, on entend désigner tout composé chimique qui est soluble dans la solution aqueuse de chlorure de sodium, c'est-à-dire dont au moins 10 mg peuvent être dissous dans 100 g de solution, et qui permet de faire précipiter les ions de plomb à l'état d'un composé insoluble dans la solution aqueuse de chlorure de sodium de façon à ce que la teneur en ions de plomb dans la solution soit alors inférieure à 1 mg par 100 g de solution.

De manière préférée, on met en oeuvre dans le procédé selon l'invention un agent précipitant du plomb qui comprend du soufre et un métal alcalin ou alcalino-terreux.

Selon une première forme de réalisation du procédé selon l'invention, l'agent précipitant du plomb est sélectionné parmi les sulfures de métaux alcalins ou alcalino-terreux. Des sulfures qui conviennent bien pour la réalisation du procédé sont les sulfures de métal alcalin représentés par la formule M₂Sₓ dans laquelle M représente un métal alcalin et x = 1 à 5. Les sulfures de sodium représentés par la formule Na₂Sₓ dans laquelle x = 1 à 5 sont préférés. Le sulfure de sodium représenté par la formule Na₂S est tout particulièrement préféré. Les sulfures peuvent être mis en oeuvre sous forme hydratée.

Selon une deuxième forme de réalisation du procédé selon l'invention, l'agent précipitant du plomb est sélectionné parmi les thiocarbonates de métaux alcalins ou alcalino-terreux. Des thiocarbonates qui conviennent bien pour la réalisation du procédé sont les thiocarbonates de formule générale MₙCSₓ dans laquelle M représente un métal alcalin ou alcalino-terreux, n est un nombre entier égal à 1 ou 2 et x est un nombre entier ou fractionnaire variant de 3 à 7. Les thiocarbonates de métaux alcalin de formule M₂CSₓ dans laquelle M est un métal alcalin et x est égal à 3 ou 4 sont préférés. Le perthiocarbonate de sodium représenté par la formule Na₂CS₄, commercialisé notamment sous le nom commercial OPTOELOC®TC, est particulièrement préféré. Les thiocarbonates peuvent être mis en oeuvre sous forme hydratée.

Selon une troisième forme de réalisation du procédé selon l'invention, l'agent précipitant du plomb est sélectionné parmi les trimercaptotriazines de métaux alcalins ou alcalino-terreux. Des trimercaptotriazines qui conviennent bien pour la réalisation du procédé sont les trimercaptotriazines de formule générale 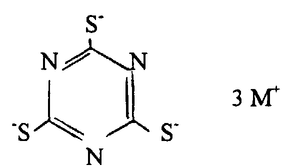 dans laquelle M représente un métal alcalin. Les trimercaptotriazines dans lesquelles le métal M est du sodium sont particulièrement préférés. Le trimercaptotriazine de sodium commercialisé notamment sous le nom TMT 15 convient bien.

Dans la première étape du procédé selon l'invention, on traite une fumée contenant du chlorure d'hydrogène, du plomb et les métaux polyvalents autres que Pb, par voie sèche, avec du bicarbonate de sodium, puis on sépare le résidu solide qui se forme de la fumée. On entend par "traitement d'une fumée par voie sèche avec du bicarbonate de sodium", un traitement dans lequel du bicarbonate de sodium est introduit à l'état solide dans la fumée, en l'absence d'un liquide, en particulier d'eau. Le résidu solide contient du chlorure de sodium, résultant de la réaction du chlorure d'hydrogène de la fumée avec le bicarbonate de sodium. Il contient en outre lesdits métaux polyvalents et une partie substantielle du plomb de la fumée, ainsi que du carbonate de sodium correspondant à l'excès de bicarbonate de sodium mis en oeuvre pour réagir avec le chlorure d'hydrogène. Le résidu solide renferme, en général, des cendres volantes. L'invention s'applique spécialement aux résidus solides recueillis du municipales. Suivant la nature des ordures incinérées, le résidu solide recueilli renferme des métaux polyvalents autres que le plomb, tels que le calcium, le magnésium, l'aluminium et des métaux lourds, tels que notamment le cadmium, le mercure, l'antimoine, le cobalt, le chrome, le cuivre, le manganèse, le vanadium, l'étain, le fer, le nickel et le zinc. Le résidu solide recueilli peut également comprendre d'autres produits solubles dans l'eau tels que du chlorure de potassium et du sulfate de sodium. Le résidu solide recueilli peut également comprendre des composés organiques. Des informations complémentaires concernant le traitement de la fumée avec du bicarbonate de sodium et la nature du résidu solide recueilli de ce traitement sont accessibles dans la demande internationale WO 93/04983 (SOLVAY).

Dans la deuxième étape du procédé selon l'invention, on introduit dans un milieu aqueux le résidu solide recueilli de la première étape. La quantité d'eau mise en oeuvre n'est pas critique en elle-même, sauf qu'elle doit être au moins suffisante pour dissoudre le chlorure de sodium et les autres matières solubles du résidu solide. On n'a toutefois pas intérêt à utiliser une quantité d'eau excédentaire. On peut aussi utiliser une solution diluée de chlorure de sodium.

Dans le procédé selon l'invention, on met en oeuvre, à la deuxième étape, un milieu aqueux alcalin dont le pH est réglé entre 8 et 14, de manière à précipiter au moins une partie des métaux polyvalents sous la forme d'hydroxydes métalliques. Le pH est de préférence réglé entre 8 et 11. L'alcalinité du milieu aqueux peut être réalisée par le carbonate de sodium déjà présent dans le résidu solide ou en additionnant au milieu aqueux une base, telle que le carbonate ou l'hydroxyde de sodium. Au cas où le milieu aqueux serait trop alcalin, le pH peut être réglé en y ajoutant un acide, tel que l'acide chlorhydrique ou du CO₂.

Dans la troisième étape du procédé selon l'invention, on filtre le milieu aqueux recueilli de la deuxième étape pour séparer les produits insolubles de la solution aqueuse de chlorure de sodium. Les hydroxydes métalliques précipités sont séparés, en même temps que les cendres volantes, de la solution aqueuse de chlorure de sodium dans cette étape de filtration. La filtration du milieu aqueux peut se faire par n'importe quel moyen de séparation adéquat. La filtration se fait avantageusement sur un filtre à bande ou sur un filtre-presse. On entend assimiler à la notion de filtration, non seulement les toiles et tamis filtrants, mais également les moyens équivalents de séparation mécanique d'une substance solide d'un milieu liquide, tels que les décanteurs et les dispositifs d'essorage.

Selon l'invention, la solution aqueuse de chlorure de sodium recueillie de la troisième étape est traitée, dans une quatrième étape, avec l'agent précipitant du plomb. Une caractéristique importante de l'invention réside dans la localisation du traitement avec l'agent précipitant, ce traitement étant effectué après la filtration de la troisième étape. On a en effet observé, toutes autres choses égales, que le traitement avec l'agent précipitant est plus efficace sur l'élimination du plomb, lorsqu'il est effectué après la filtration du milieu aqueux de la troisième étape plutôt qu'avant celle-ci.

Dans la quatrième étape du procédé selon l'invention, la quantité d'agent précipitant à mettre en oeuvre dépend de la teneur en plomb du milieu aqueux issu de la filtration, c'est-à-dire de la troisième étape du procédé, qui, elle-même, dépend entre autres de la teneur en plomb du résidu solide. La quantité d'agent précipitant est généralement d'au moins 10 mg par kg de solution. La quantité d'agent précipitant est de préférence au moins 50 mg/kg de solution. La quantité d'agent précipitant ne dépasse généralement pas 2000 mg/kg. La quantité d'agent précipitant ne dépasse de préférence pas 1000 mg par kg de solution.

Dans la quatrième étape du procédé selon l'invention, le traitement au moyen de l'agent précipitant est généralement effectué à une température d'au moins 5 °C. La température à laquelle est effectuée le traitement au moyen de l'agent précipitant est de préférence d'au moins 15 °C. Le traitement au moyen de l'agent précipitant est généralement effectué à une température ne dépassant pas 100 °C. La température à laquelle est effectuée le traitement au moyen de l'agent précipitant est de préférence inférieure ou égale à 80 °C.

Dans la quatrième étape du procédé selon l'invention, le traitement au moyen de l'agent précipitant est généralement effectué à un pH supérieur ou égal à 6. Le traitement au moyen de l'agent précipitant est de préférence effectué à un pH d'au moins 8. Dans la quatrième étape du procédé selon l'invention, le traitement au moyen de l'agent précipitant est généralement effectué à un pH ne dépassant pas 13. Le traitement au moyen de l'agent précipitant est de préférence effectué à un pH inférieur ou égal à 11.

Dans la quatrième étape du procédé selon l'invention, le traitement de la solution aqueuse de chlorure de sodium au moyen de l'agent précipitant provoque la précipitation du plomb présent dans la solution. Dans le cas où d'autres métaux polyvalents sont présents dans la solution, il peut arriver qu'une partie substantielle de certains au moins de ces métaux soient également précipités.

En variante, en plus de l'agent précipitant, des additifs améliorant la précipitation du plomb et/ou des autres métaux polyvalents peuvent être ajoutés à la solution aqueuse recueillie de la troisième étape. Des exemples de tels additifs sont notamment des floculants polymériques du type anionique ou cationique.

Dans la quatrième étape du procédé selon l'invention, la séparation du précipité de la solution aqueuse peut être effectuée par tout moyen adéquat. Elle peut notamment être effectuée par décantation ou au moyen d'une filtration. Selon une forme d'exécution préférée du procédé selon l'invention, la séparation du précipité de la solution aqueuse industrielle est effectuée d'abord par décantation, puis au moyen d'un filtre à sable.

Le procédé selon l'invention peut éventuellement comporter des étapes additionnelles d'épuration de la solution aqueuse de chlorure de sodium, telles que des étapes de traitement au moyen de charbon actif, au moyen d'autres agents précipitant spécifiques à d'autres métaux, au moyen d'acides ou des résines chélatantes, etc.

Selon une première variante du procédé selon l'invention, appliquée spécialement au cas où la solution aqueuse de chlorure de sodium contient des composés organiques, on traite la solution aqueuse de chlorure de sodium issue de la quatrième étape du procédé selon l'invention, au moyen de charbon actif. Un charbon actif qui convient bien est notamment le charbon actif connu sous le nom commercial CECARBON®GAC 1240 qui se présente sous forme de granules d'environ 1 mm de diamètre et qui présente une surface spécifique d'environ 1000 m²/g.

Selon une deuxième variante du procédé selon l'invention, on traite la solution aqueuse de chlorure de sodium issue de la quatrième étape du procédé selon l'invention, au moyen d'au moins une résine chélatante. Les résines chélatantes utilisées dans cette variante du procédé selon l'invention sont de préférence des résines du type cationique et plus spécialement des résines du type Na (qui sont des résines dans lesquelles les cations interchangeables sont des cations sodium). Ces résines chélatantes sont bien connues et leur usage pour épurer une solution de chlorure de sodium se trouve notamment décrit dans la demande internationale WO 93/04983 (SOLVAY). Des résines chélatantes préférées dans le cadre de l'invention sont des résines iminodiacétiques ou aminophosphoniques tels que notamment les résines LEWATIT®TP208 et LEWATIT®OC 1060 WS. La résine utilisée se présente de préférence à l'état de granules qui sont disposés dans une colonne, sur lesquels on fait passer le liquide aqueux.

Selon une troisième variante du procédé selon l'invention, qui est particulièrement préférée, on traite la solution aqueuse de chlorure de sodium issue de la quatrième étape du procédé selon l'invention, au moyen de charbon actif et au moyen d'au moins une résine chélatante. Dans cette variante, on traite, de préférence, la solution aqueuse de chlorure de sodium, dans une cinquième étape, au moyen de charbon actif, puis, dans une sixième étape, au moyen d'au moins une résine chélatante.

Le procédé selon l'invention permet d'obtenir des solutions aqueuses industrielles de chlorure de sodium dont la teneur en plomb est, généralement, inférieure à 10 mg par kg de solution. Le plus souvent, le procédé selon l'invention permet d'obtenir des solutions aqueuses industrielles de chlorure de sodium dont la teneur en plomb est inférieure à 1 mg par kg de solution.

Les solutions aqueuses de chlorure de sodium industrielles obtenues au moyen du procédé selon l'invention trouvent dès lors diverses applications dans l'industrie. Elles peuvent notamment servir de matière première pour la fabrication de carbonate de sodium par le procédé de la soude à l'ammoniaque, pour la fabrication électrolytique de chlore et de solutions aqueuses d'hydroxyde de sodium, pour la fabrication électrolytique de solutions aqueuses de chlorate de sodium ainsi que pour la fabrication de sel solide.

L'invention réalise de manière originale et économique une valorisation des résidus provenant de l'épuration de filmées. Elle est tout spécialement adaptée au traitement des filmées provenant des installations d'incinération des ordures ménagères ou municipales.

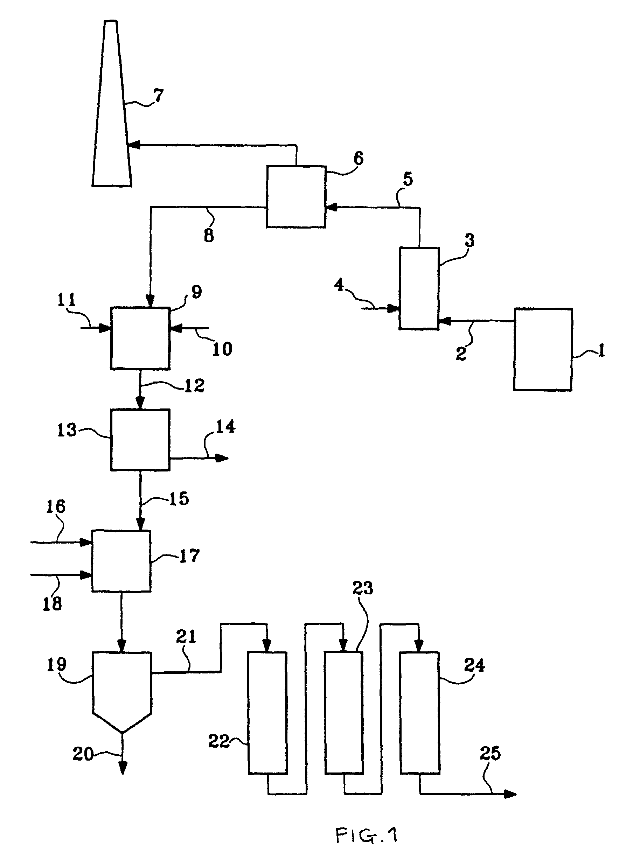

Des particularités et détails de l'invention vont apparaître au cours de la description de la figure annexée qui représente le schéma d'une forme de réalisation particulièrement préférée de l'invention.

L'installation représentée à la figure annexée est conçue pour l'épuration d'une fumée provenant de l'incinération d'ordures ménagères ou municipales et pour valoriser les effluents recueillis de l'épuration de cette fumée. Cette fumée contient notamment du chlorure d'hydrogène, du plomb, des métaux polyvalents autres que le plomb, des cendres volantes et des composés organiques. L'installation comprend un réacteur tubulaire 3 alimenté par la fumée 2 émise par un four d'incinération d'ordures ménagères 1. Du bicarbonate de sodium 4 à l'état d'une poudre anhydre, est injectée dans la fumée 2 dans le réacteur 3. Dans le réacteur 3, le bicarbonate de sodium réagit avec le chlorure d'hydrogène présent dans la fumée, en formant du chlorure de sodium. La fumée 5 extraite du réacteur 3 traverse un dispositif de dépoussiérage 6, puis est évacué à la cheminée 7. Du fait que la fumée 5 est sèche, le dispositif de dépoussiérage peut avantageusement consister en un séparateur mécanique à tissus filtrants ou en un électrofiltre. Dans le dispositif de dépoussiérage 6, la fumée est débarrassée des particules solides 8 qu'elle contient. Celles-ci comprennent du chlorure de sodium, du carbonate de sodium, du plomb, des métaux polyvalents autres que le plomb, des cendres volantes et des produits organiques. Le résidu solide 8 est introduit dans une chambre de dissolution 9 où on le disperse dans une quantité suffisante d'eau 10 pour dissoudre les matières hydrosolubles qu'il contient. Le milieu aqueux ainsi obtenu comprend une solution aqueuse de chlorure de sodium et des produits insolubles. Le milieu aqueux est généralement alcalin. Selon que son pH initial est inférieur ou supérieur à la valeur recherchée (généralement de 8 à 14), on lui additionne une solution aqueuse 11 d'hydroxyde de sodium ou d'acide chlorhydrique. Le milieu aqueux alcalin 12 soutiré de la chambre 9 contient, en général, une partie des métaux polyvalents à l'état d'hydroxydes métalliques insolubles. Le milieu aqueux est traitée sur un filtre 13 pour séparer les matières insolubles 14, comprenant notamment les cendres volantes et les hydroxydes des métaux polyvalents, insolubles, de la solution aqueuse de chlorure de sodium 15. La solution aqueuse 15 recueillie du filtre 13 est une solution aqueuse de chlorure de sodium. Elle est contaminée par du plomb et par des métaux polyvalents dissous en une quantité habituellement trop élevée pour permettre son utilisation dans un procédé industriel. La solution 15 est introduite dans un réacteur 17 dans lequel on introduit également l'agent précipitant du plomb 16 pour précipiter au moins une partie du plomb et éventuellement des autres métaux polyvalents présents dans la solution. Selon que son pH est inférieur ou supérieur à la valeur recherchée (généralement de 6 à 13), on peut également amener son pH à la valeur recherchée par addition d'une solution aqueuse 18 d'hydroxyde de sodium ou d'acide chlorhydrique. Le précipité formé 20 est séparé de la solution aqueuse de chlorure de sodium 21 dans un décanteur 19. La solution aqueuse 21 est ensuite filtrée sur un filtre à sable 22, puis traitée au moyen de charbon actif 23, puis au moyen d'une résine chélatante 24. On recueille de la colonne 24 comprenant la résine chélatante, une solution aqueuse industrielle de chlorure de sodium 25, de pureté suffisante pour qu'elle puisse être utilisée telle quelle dans un procédé industriel.

### Exemple 1 (conforme à l'invention)

1 kg d'une solution aqueuse 15 recueillie du filtre 13 et comprenant 166,4 g de chlorure de sodium, 101,7 g de carbonate de sodium, 168 mg de plomb, 190 mg d'aluminium et des teneurs individuelles en métaux polyvalents (tels que As, Ba, Ca, Cd, Co, Cr, Cu, Fe, Mg, Mn, Ni, Sb, Sr, V, Zn) de 0,1 à 9 mg selon le métal polyvalent, à été traité au moyen de 750 mg de Na₂S, à 50°C pendant 1 heure. Initialement, le pH de la solution aqueuse était de 10,8. Après l'ajout du Na₂S le pH passa à 11,5. Le pH a été ramené à 10,7 par l'ajout d'acide chlorhydrique. Après la séparation du précipité formé 20, on a relevé une teneur en plomb de la solution aqueuse 21, inférieure à 1 mg/kg de solution.

### Exemple 2 (exemple comparatif, non conforme à l'invention)

On a répété toutes les conditions de l'essai de l'exemple 1, à la seule exception que le sulfure de sodium Na₂S fut ajouté au milieu alcalin 12, avant le traitement sur le filtre 13. On a relevé, dans la solution aqueuse de chlorure de sodium 21 une teneur résiduelle en plomb égale à 80 mg/kg de solution.

## Revendications

1. Procédé pour la fabrication d'une solution aqueuse industrielle de chlorure de sodium, selon lequel,
. dans une première étape, on traite une fumée contenant du chlorure d'hydrogène, du plomb et des métaux polyvalents autres que le plomb, par voie sèche, avec du bicarbonate de sodium pour former un résidu solide comprenant du chlorure de sodium, du carbonate de sodium, le plomb et les métaux polyvalents, puis on sépare le résidu solide de la fumée;
. dans une deuxième étape, on introduit le résidu solide recueilli de la première étape dans un milieu aqueux dont le pH est entre 8 et 14;
. dans une troisième étape, on filtre le milieu aqueux recueilli de la deuxième étape et on recueille du filtre une solution aqueuse de chlorure de sodium,
caractérisé en ce que,
. dans une quatrième étape, on traite la solution aqueuse issue de la troisième étape au moyen d'au moins un agent précipitant du plomb soluble, puis on écarte le précipité formé.

2. Procédé selon la revendication 1, caractérisé en ce que l'agent précipitant du plomb comprend du soufre et un métal alcalin ou alcalino-terreux.

3. Procédé selon la revendication 2, caractérisé en ce que l'agent précipitant est sélectionné parmi sulfures, les thiocarbonates et les trimercaptotriazines de métaux alcalins ou alcaline-terreux.

4. Procédé selon la revendication 3, caractérisé en ce que l'agent précipitant du plomb est sélectionné parmi les sulfures de métaux alcalin représentés par la formule M₂Sₓ dans laquelle M représente un métal alcalin et X = 1 à 5,

5. Procédé selon la revendication 4, caractérisé en ce que l'agent précipitant est le sulfure de sodium représenté par la formule Na₂S.

6. Procédé selon la revendication 3, caractérisé en ce que l'agent précipitant est sélectionné parmi les thiocarbonates de formule générale MₙCSₓ, dans laquelle M représente un métal alcalin ou alcalino-terreux, n est un nombre entier égal à 1 ou 2 et x est un nombre entier ou fractionnaire variant de 3 à 7.

7. Procédé selon la revendication 6, caractérisé en ce que l'agent précipitant est sélectionné parmi les thiocarbonates de formule générale M₂CSₓ dans laquelle M est un métal alcalin et x est égal à 3 ou 4.

8. Procédé selon la revendication 7, caractérisé en ce que l'agent précipitant est le perthiocarbonate ce sodium représenté par la formule Na₂CS₄.

9. Procédé selon la revendication 3, caractérisé en ce que l'agent précipitant est sélectionné parmi les trimercaptotriazines de formule générale 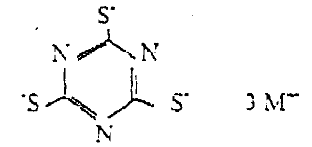 dans laquelle M représente un métal alcalin.

10. Procédé selon la revendication 9, caractérisé en ce que le métal alcalin est du sodium.

11. Procédé selon l'une quelconque des revendications 1 à 10, caractérisé en ce que la quantité d'agent précipitant mise en oeuvre est d'au moins 10 mg par kg de solution.

12. Procédé selon l'une quelconque des revendications 1 à 11, caractérisé en ce que le traitement au moyen de l'agent précipitant est effectué à un pH de 6 à 13.

13. Procédé selon l'une quelconque des revendications 1 à 12, caractérisé en ce que l'on traite la solution aqueuse de chlorure de sodium issue de la quatrième étape au moyen de charbon actif et/ou au moyen d'au moins une résine chélatante.

## Patentansprüche

1. Verfahren zur Herstellung einer industriellen wässrigen Natriumchloridlösung, gemäß dem
man in einem ersten Schritt ein Rauchgas, das Chlorwasserstoff, Blei und von Blei verschiedene mehrwertige Metalle enthält, auf trockenem Weg mit Natriumbicarbonat behandelt, um einen festen Rückstand zu bilden, der Natriumchlorid, Natriumcarbonat, Blei und die mehrwertigen Metalle umfasst, man dann den festen Rückstand von dem Rauchgas abtrennt;
man in einem zweiten Schritt den aus dem ersten Schritt gewonnenen festen Rückstand in ein wässriges Medium, dessen pH zwischen 8 und 14 liegt, einführt;
man in einem dritten Schritt das aus dem zweiten Schritt gewonnene wässrige Medium filtriert, und man aus dem Filter eine wässrige Natriumchloridlösung gewinnt,
dadurch gekennzeichnet, dass
man in einem vierten Schritt die aus dem dritten Schritt hervorgegangene wässrige Lösung mittels wenigstens eines Fällmittels des löslichen Bleis behandelt, man dann den gebildeten Niederschlag verwirft,

2. Verfahren gemäß Anspruch 1, dadurch gekennzeichnet, dass das Fällmittel des Bleis Schwefel und ein Alkali- oder Erdalkalimetall umfasst.

3. Verfahren gemäß Anspruch 2, dadurch gekennzeichnet, dass das Fällmittel unter Sulfiden, den Thiocarbonaten und den Trimercaptotriazinen von Alkali- oder Erdalkalimetallen ausgewählt ist.

4. Verfahren gemäß Anspruch 3, dadurch gekennzeichnet, dass das Fällmittel des Bleis unter den Sulfiden von Alkalimetallen, die durch die Formel M₂Sₓ dargestellt werden, in der M ein Alkalimetall darstellt und x = 1 bis 5, ausgewählt ist.

5. Verfahren gemäß Anspruch 4, dadurch gekennzeichnet, dass das Fällmittel Natriumsulfid ist, dargestellt durch die Formel Na₂S.

6. Verfahren gemäß Anspruch 3, dadurch gekennzeichnet, dass das Fällmittel unter den Thiocarbonaten der allgemeinen Formel MₙCSₓ, in der M ein Alkali- oder Erdalkalimetall darstellt, n eine ganze Zahl gleich 1 oder 2 ist und x eine ganze Zahl oder eine Bruchzahl zwischen 3 und 7 ist, ausgewählt ist.

7. Verfahren gemäß Anspruch 6, dadurch gekennzeichnet, dass das Fällmittel unter den Thiocarbonaten der allgemeinen Formel M₂CSₓ, in der M ein Alkalimetall ist und x gleich 3 oder 4 ist, ausgewählt ist.

8. Verfahren gemäß Anspruch 7, dadurch gekennzeichnet, dass das Fällmittel Natriumperthiocarbonat ist, dargestellt durch die Formel Na₂CS₄.

9. Verfahren gemäß Anspruch 3, dadurch gekennzeichnet, dass das Fällmittel unter den Trimercaptotriazinen der allgemeinen Formel 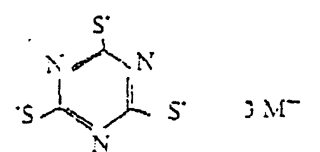 in der M ein Alkalimetall darstellt, ausgewählt ist.

10. Verfahren gemäß Anspruch 9, dadurch gekennzeichnet, dass das Alkalimetall Natrium ist.

11. Verfahren gemäß einem der Ansprüche 1 bis 10, dadurch gekennzeichnet, dass die eingesetzte Menge an Fällmittel wenigstens 10 mg pro kg Lösung beträgt.

12. Verfahren gemäß einem der Ansprüche 1 bis 11, dadurch gekennzeichnet, dass die Behandlung mit dem Fällmittel bei einem pH von 6 bis 13 ausgeführt wird.

13. Verfahren gemäß einem der Ansprüche 1 bis 12, dadurch gekennzeichnet, dass man die aus dem vierten Schritt hervorgegangene wässrige Natriumchloridlösung mittels Aktivkohle und/oder mittels wenigstens einem Chelatharz behandelt.

## Claims

1. Process for manufacturing an industrial aqueous sodium chloride solution, in which:
• in a first step, flue gases containing hydrogen chloride, lead and polyvalent metals other than lead are treated, by a dry process, with sodium bicarbonate in order to form a solid residue comprising sodium chloride, sodium carbonate, lead and polyvalent metals, and the solid residue is then separated from the flue gases;
• in a second step, the solid residue collected from the first step is introduced into an aqueous medium whose pH is between 8 and 14;
• in a third step, the aqueous medium collected from the second step is filtered and an aqueous sodium chloride solution is collected from the filtration, the process being characterized in that,
• in a fourth step, the aqueous solution obtained from the third step is treated with at least one soluble lead-precipitating agent, and the precipitate formed is then removed.

2. Process according to Claim 1, characterized in that the lead-precipitating agent comprises sulphur and an alkali metal or alkaline-earth metal.

3. Process according to Claim 2, characterized in that the precipitating agent is selected from alkali metal or alkaline-earth metal sulphides, thiocarbonates and trimercaptotriazines.

4. Process according to Claim 3, characterized in that the lead-precipitating agent is selected from the alkali metal sulphides represented by the formula M₂Sₓ in which M represents an alkali metal and x = 1 to 5.

5. Process according to Claim 4, characterized in that the precipitating agent is the sodium sulphide represented by the formula Na₂S.

6. Process according to Claim 3, characterized in that the precipitating agent is selected from the thiocarbonates of general formula MₙCSₓ in which M represents an alkali metal or alkaline-earth metal, n is an integer equal to 1 or 2 and x is an integer or fraction ranging from 3 to 7.

7. Process according to Claim 6, characterized in that the precipitating agent is selected from the thiocarbonates of general formula M₂CSₓ in which M is an alkali metal and x is equal to 3 or 4.

8. Process according to Claim 7, characterized in that the precipitating agent is the sodium perthiocarbonate represented by the formula Na₂CS₄.

9. Process according to Claim 3, characterized in that the precipitating agent is selected from the trimercaptotriazines of general formula 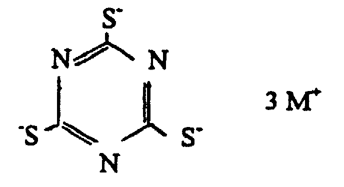 in which M represents an alkali metal.

10. Process according to Claim 9, characterized in that the alkali metal is sodium.

11. Process according to any one of Claims 1 to 10, characterized in that the amount of precipitating agent used is at least 10 mg per kg of solution.

12. Process according to any one of Claims 1 to 11, characterized in that the treatment with the precipitating agent is carried out at a pH of from 6 to 13.

13. Process according to any one of Claims 1 to 12, characterized in that the aqueous sodium chloride solution obtained from the fourth step is treated with active charcoal and/or with at least one chelating resin.
